# EUROPÄISCHE PATENTSCHRIFT

(11) **EP 2 606 558 B1**
(45) Veröffentlichungstag und Bekanntmachung des Hinweises auf die Patenterteilung: **30.09.2015**
(21) Anmeldenummer: 11727436.5
(22) Anmeldetag: 21.06.2011
(51) Int. Cl.: H02K 3/50

(54) **KONTAKTEINRICHTUNG IN EINEM STATOR EINER ELEKTRISCHEN MASCHINE**
CONTACT DEVICE IN A STATOR OF AN ELECTRIC MACHINE
DISPOSITIF DE CONTACT DANS UN STATOR DE MACHINE ÉLECTRIQUE

(30) Priorität: 16.08.2010 DE 102010039340
(43) Veröffentlichungstag der Anmeldung: 26.06.2013
(73) Patentinhaber: Robert Bosch GmbH, 70442 Stuttgart (DE)
(72) Erfinder: MEYER, Christian, 76228 Karlsruhe-Wolfartsweier (DE)
(86) Internationale Anmeldenummer: PCT/EP2011/060345
(87) Internationale Veröffentlichungsnummer: WO 2012/022523

(56) Entgegenhaltungen:
- WO-A1-2006/120054
- DE-A1- 19 842 170
- DE-A1-102008 000 885
- US-A1- 2008 242 124

## Beschreibung

Die Erfindung bezieht sich auf eine Kontakteinrichtung in einem Stator einer elektrischen Maschine nach dem Oberbegriff des Anspruches 1.

### Stand der Technik

Aus der DE 10 2008 054 529 A1 ist ein als Innenläufermotor ausgebildeter Elektromotor bekannt, der einen zylindrischen Stator aufweist, an dem über den Umfang verteilt eine Mehrzahl von Spulen angeordnet sind. Die Spulen werden über eine Kontakteinrichtung bestromt, die stirnseitig auf den Stator aufgesetzt ist. Die Kontakteinrichtung besteht aus mehreren, aufeinander gestapelten Einzelringen, die jeweils Träger von Schneidklemmen sind, über die der elektrische Kontakt zu den Spulen am Stator hergestellt wird. Zwischen den elektrisch leitenden Einzelringen befinden sich Trennringe aus nicht-leitendem Material zur Isolierung benachbarter Einzelringe. Die axiale Dicke der Kontakteinrichtung bemisst sich nach der Anzahl der aufeinander gestapelten Einzelringe und der zwischenliegenden Trennringe.

Die WO 2006/120054 A1 offenbart eine Kontakteinrichtung mit einem ringförmigen Kontaktträger, der aus elektrisch isolierendem Material besteht. An einer Stirnseite des Kontaktträgers sind elektrische Leitungsbahnen gehalten, die Öffnungen aufweisen, in die Höcker bzw. Pins einragen, welche einteilig mit dem Kontaktträger ausgebildet sind.

Die DE 10 2008 000 885 A1 offenbart eine Kontakteinrichtung mit einer Leiterschiene, die auf einem Kunststoff-Trägerkörper aufgenommen ist. An dem Trägerkörper sind Kunststoffzapfen angeformt, die in Löcher in der Leiterschiene einragen und heißverstemmt sind.

### Offenbarung der Erfindung

Der Erfindung liegt die Aufgabe zu Grunde, mit einfachen konstruktiven Maßnahmen eine kompakt bauende elektrische Kontaktierung des Stators in einer elektrischen Maschine anzugeben.

Diese Aufgabe wird erfindungsgemäß mit den Merkmalen des Anspruches 1 gelöst. Die Unteransprüche geben zweckmäßige Weiterbildungen an.

Die erfindungsgemäße Kontakteinrichtung kann in einem Stator einer elektrischen Maschine wie z.B. einem Generator oder einem Elektromotor eingesetzt werden. Bei der elektrischen Maschine handelt es sich beispielsweise um einen elektronisch kommutierten Synchronmotor. Anwendungsgebiete sind beispielsweise Motoren in Kraftfahrzeugen wie z.B. Servomotoren in Lenksystemen oder Antriebsmotoren bzw. Generatoren in Hybrid- oder Elektrofahrzeugen. In Betracht kommen auch Anwendungen in Hilfsaggregaten in Fahrzeugen, beispielsweise als Scheibenwischermotoren, Fensterhebermotoren oder Motoren zur Sitzverstellung. Des Weiteren sind Anwendungen unabhängig von Fahrzeugen möglich, beispielsweise als Antriebsmotor in Fahrrädern oder auch in elektrisch betätigten Werkzeugmaschinen, insbesondere Handwerkzeugmaschinen.

Über die Kontakteinrichtung werden die Spulen im Stator mit Strom versorgt. Die Kontakteinrichtung umfasst einen einzigen ringförmigen Kontaktträger aus elektrisch isolierendem Material sowie elektrisch leitende Leitungsbahnen zur Kontaktierung des Wicklungsdrahtes der Spulen. Bei der erfindungsgemäßen Kontakteinrichtung sind die Leitungsbahnen über umgeformte Befestigungselemente am Kontaktträger gehalten.

Diese Ausführung hat den Vorteil konstruktiver Einfachheit und einer kompakten Bauweise. Der aus einem isolierenden Material hergestellte Kontaktträger kann auf die Stirnseite des Stators aufgesetzt und mit dem Statorgehäuse verbunden werden. Der Kontaktträger dient somit zum einen zur Befestigung der Kontakteinrichtung am Stator und zum anderen als Träger der Leitungsbahnen, wobei auf Grund der Ausführung des Kontaktträgers aus elektrisch isolierendem Material verschiedene Leitungsbahnen auf dem Kontaktträger elektrisch voneinander isoliert sind. Insgesamt genügt ein einziger ringförmiger Kontaktträger, an dem die Leitungsbahnen angeordnet sind.

Die Befestigung und Halterung der Leitungsbahnen am Kontaktträger über die umgeformten Befestigungselemente hat den Vorteil, dass die Leitungsbahnen sicher am Kontaktträger gehalten sind. Zugleich lässt sich diese Art der Befestigung in einer einfachen Weise realisieren. Durch den Umformprozess sind die Leitungsbahnen in kraft- bzw. formschlüssiger Weise am Kontaktträger gesichert.

Der Umformprozess erfolgt zweckmäßigerweise als Warmumformen, wobei ggf. auch ein Kaltumformen in Betracht kommt.

Erfindungsgemäß sind die Leitungsbahnen als Stanzteile ausgeführt. Die Leitungsbahnen werden aus einem Stanzblech ausgestanzt, wobei vorteilhafterweise am Kontaktträger winkelversetzt zumindest zwei gleiche Stanzteile angeordnet sind. Die Stanzteile können zu Gruppen zusammengefasst werden, die sich über den Umfang an der Stirnseite des Kontaktträgers wiederholen, wobei jede Gruppe mehrere Stanzteile umfasst, die entweder gleich oder verschiedenartig ausgebildet sind. In Umfangsrichtung gibt es somit mehrere separat ausgebildete Stanzteile als Leitungsbahnen, die sich ggf. in Umfangsrichtung überlappen, jedoch radial versetzt zueinander angeordnet sind, insbesondere in konzentrisch verlaufenden Bahnen. Zumindest ein Abschnitt eines Stanzteils liegt vorteilhafterweise flächig auf dem Kontaktträger auf und ist über das umgeformte Befestigungselement am Kontaktträger fixiert. Das flächige Aufliegen auf der Stirnseite des Kontaktträgers gewährleistet eine sichere Halterung des Stanzteils. Ein weiterer Abschnitt eines Stanzteils ist zweckmäßigerweise gegenüber der Ebene der Stirnseite winklig umgebogen, insbesondere in einem 90°-Winkel, und dient zur elektrischen Kontaktierung mit dem Spulendraht einer Spule am Stator oder mit einer Leistungselektronik. An beiden Stirnseiten des Kontaktträgers sind Leitungsbahnen vorgesehen, von denen mindestens eine Leitungsbahn, vorzugsweise aber sämtliche Leitungsbahnen über mindestens ein umgeformtes Befestigungselement am Kontaktträger gehalten ist. Pro Leitungsbahn ist mindestens ein umformbares Befestigungselement vorgesehen, vorteilhafterweise aber zumindest zwei Befestigungselemente. Bei der Anordnung der Leitungsbahnen an beiden, gegenüberliegenden Stirnseiten des Kontaktträgers verlaufen die Leitungsbahnen parallel und mit Abstand zueinander und liegen somit in unterschiedlichen Ebenen. Auch im Bereich der gleichen Stirnseite können verschiedene Leitungsbahnen in unterschiedlichen Ebenen angeordnet sein können, insbesondere mithilfe von Stützkörpern am Kontaktträger, welche vorzugsweise einteilig mit dem Kontaktträger ausgebildet sind. In diesem Fall ist auch ein kontaktfreies Kreuzen von Leitungsbahnen im Bereich der gleichen Stirnseite des Kontaktträgers möglich.

Gemäß einer vorteilhaften Ausführung ist vorgesehen, dass die Befestigungselemente einstückig mit dem Kontaktträger ausgebildet sind. Die Befestigungselemente bilden somit einen Bestandteil des Kontaktträgers, so dass auf zusätzliche, als separate Bauteile ausgeführte Befestigungselemente verzichtet werden kann. Beispielsweise sind die Befestigungselemente als Befestigungspin bzw. Befestigungszapfen ausgeführt, der sich winklig, insbesondere orthogonal zu einer Stirnseite des Kontaktträgers erhebt und im umgeformten Zustand eine Leitungsbahn formschlüssig am Kontaktträger hält. Der umgeformte Befestigungspin übergreift hierbei zumindest einen Abschnitt der Leitungsbahn. Gemäß einer besonders vorteilhaften Ausführung ist vorgesehen, dass in die Leitungsbahn eine Ausnehmung eingebracht ist, durch die der Befestigungspin hindurch ragt. Die Leitungsbahn kann in dieser Ausführung zur Montage auf den noch unverformten Pin aufgesetzt werden, welcher anschließend dem Umformprozess unterzogen wird, um die formschlüssige Verbindung herzustellen.

Grundsätzlich möglich ist aber auch eine Ausführung der Befestigungselemente als vom Kontaktträger unabhängige Bauteile, die entweder ebenfalls im Wege des Umformens oder in sonstiger Weise mit dem Kontaktträger verbunden werden. Die Halterung und Sicherung der Leitungsbahnen erfolgt in vorbeschriebener Weise über den Umformprozess.

Zweckmäßigerweise besteht der Kontaktträger aus Kunststoff, welcher insbesondere im Kunststoff-Spritzgussverfahren herzustellen ist. Bei der einteiligen Ausführung von Kontaktträger und Befestigungselementen sind letztere an den ringförmigen Kontaktträger angespritzt.

Alternativ zu einer Ausführung als Kunststoffbauteil kommen auch Kontaktträger aus sonstigen, nicht-leitenden Materialien in Betracht, beispielsweise aus Keramik.

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht von oben eine Kontakteinrichtung, über die Spulen eines Stators einer elektrischen Maschine mit Strom versorgt werden, wobei die Kontakteinrichtung einen Kunststoff-Kontaktträger sowie Leitungsbahnen in Form von Stanzteilen aufweist,
- Fig. 2: die Kontakteinrichtung in einer perspektivischen Ansicht von unten,
- Fig. 3: eine Kontakteinrichtung in perspektivischer Darstellung in einer modifizierten Ausführung,
- Fig. 4: einen Stator einer elektrischen Maschine mit einer stirnseitig aufgesetzten Kontakteinrichtung,
- Fig. 5: die Kontakteinrichtung aus dem Beispiel nach Fig. 4 in vergrößerter Ansicht.

In den Figuren sind gleiche Bauteile mit gleichen Bezugszeichen versehen.

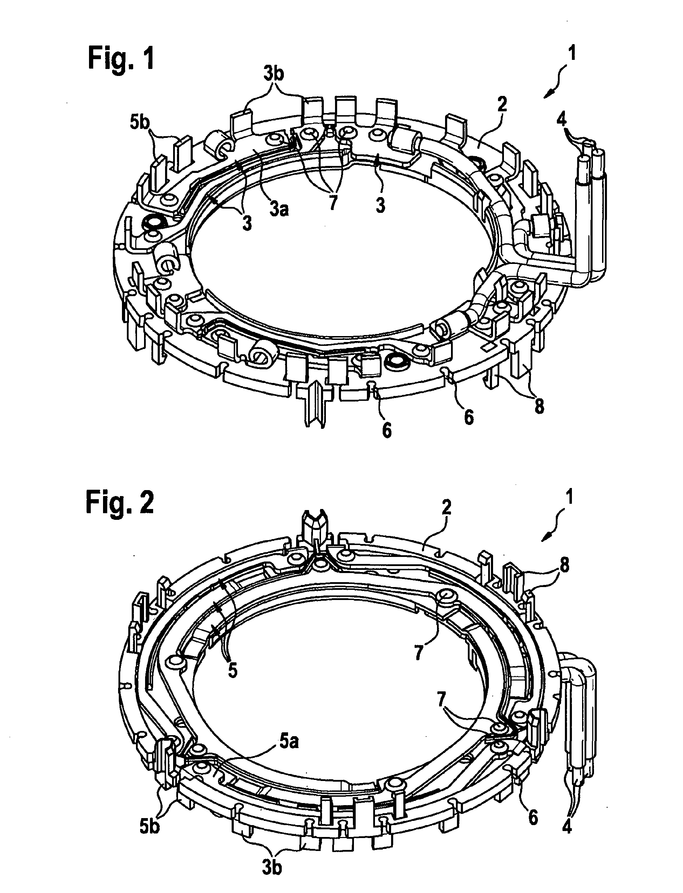

Die Figuren 1 und 2 zeigen eine Kontakteinrichtung 1 aus zwei verschiedenen Perspektiven, über die die Spulen eines Stators einer elektrischen Maschine mit Strom versorgt werden. Die Kontakteinrichtung 1 umfasst einen ringförmigen Kontaktträger 2 und elektrische Leitungsbahnen 3 an der Oberseite des Kontaktträgers 2 sowie Leitungsbahnen 5 an der Unterseite. Die Leitungsbahnen 3 und 5 sind jeweils als Stanzteile ausgeführt, die mit einem ersten, ebenen Abschnitt 3a bzw. 5a flächig an der jeweiligen Stirnseite des ringförmigen Kontaktträgers 2 aufliegen und einen winklig abgebogenen, zweiten Abschnitt 3b bzw. 5b aufweisen, welcher in einem 90°-Winkel zur Ebene des Kontaktträgers steht und über den der elektrische Kontakt zu den Spulen hergestellt wird. Die Stromversorgung der Leitungsbahnen 3, 5 erfolgt über Anschlusskontakte 4, welche als Leitungsdraht ausgeführt sind und elektrisch mit den Leitungsbahnen verbunden sind. Sämtliche Kontaktabschnitte 3b, 5b stehen über die Oberseite des Kontaktträgers 2 über. Die Leitungsbahnen 5, welche an der Unterseite des Kontaktträgers 2 angeordnet sind, ragen mit ihrer umgebogenen Endabschnitten 5b entweder durch Ausnehmungen im Kontaktträger 2 hindurch oder übergreifen den Rand des Kontaktträgers und erstrecken sich bis zur Oberseite.

Der elektrische Kontakt zum Spulendraht wird dadurch hergestellt, dass Spulendrahtenden sich in Achsrichtung erstrecken und in Aufnahmenuten 6 aufgenommen sind, die an der radialen Außenkante des Kontaktträgers 2 angeordnet sind und sich in Achsrichtung erstrecken. Die Endabschnitte der Leitungsdrähte liegen in Kontakt mit den Kontaktabschnitten 3b bzw. 5b der Leitungsbahnen 3 bzw. 5.

Die als Stanzteile ausgebildeten Leitungsbahnen 3 an der Oberseite des Kontaktträgers 2 sind zu Gruppen von jeweils drei Stanzteilen zusammengefasst, wobei sich in Umfangsrichtung diese Gruppen wiederholen. Insgesamt sind drei Gruppen mit jeweils drei Stanzteilen vorgesehen, wobei sich innerhalb einer Gruppe die Stanzteile voneinander unterscheiden.

Auf der Unterseite des Kontaktträgers 2 sind die Stanzteile 5 bahnenförmig ausgebildet und verlaufen in Umfangsrichtung, wobei benachbarte Stanzteile 5 in konzentrischen Bahnen liegen. Es sind zwei verschiedene Stanztypen vorgesehen, die jeweils in Umfangsrichtung dreifach hintereinander liegend angeordnet sind.

Die Befestigung der Leitungsbahnen 3, 5 erfolgt mithilfe von Befestigungselementen 7, die als Befestigungspins ausgebildet sind und einteilig mit dem aus Kunststoff bestehenden Kontaktträger 2 ausgeführt sind. Die Befestigungspins 7 ragen in Ausnehmungen ein, welche in die Leitungsbahnen 3, 5 eingebracht sind. Der Kontaktträger 2 ist als Kunststoff-Spritzgussbauteil ausgeführt, die Befestigungspins 7 sind an den Kontaktträger 2 angespritzt und somit einstückig mit diesem ausgebildet.

Zur Befestigung der Stanzteile 3, 5 mit dem Kontaktträger 2 werden bei der Montage zunächst die Stanzteile mit ihren Ausnehmungen auf die Befestigungspins 7 aufgesetzt. Anschließend werden die Befestigungspins 7 durch Warmumformen verformt, wodurch die Befestigungspins auf der Oberseite der Stanzteile einen Befestigungskopf bilden, welcher einen größeren Durchmesser als die Ausnehmung im Stanzteil aufweist, so dass das Stanzteil formschlüssig am Kontaktträger 2 gehalten wird. Pro Stanzteil sind zwei Befestigungspins 7 vorgesehen.

Über die Unterseite des Kontaktträgers 2 ragen einteilig mit dem Kontaktträger ausgebildete Klemmlaschen 8 hinaus, welche im montierten Zustand mit der Stirnseite des Stators verbunden sind. Die Klemmlaschen 8 befinden sich im Bereich der Außenseite des ringförmigen Kontaktträgers 2.

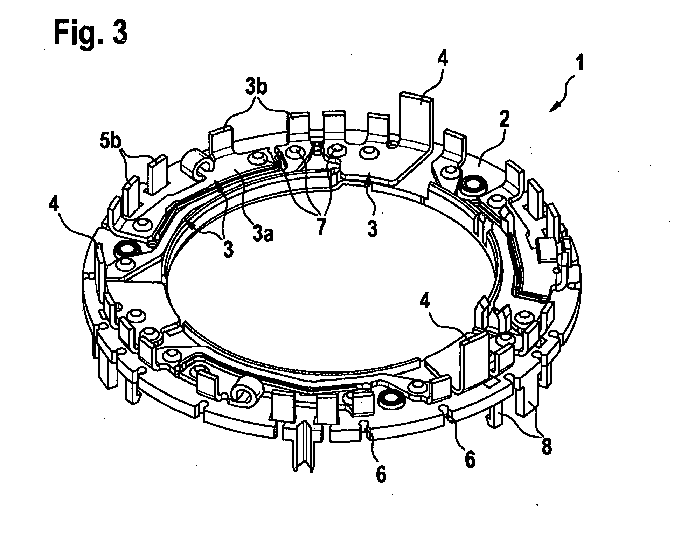

Die Kontakteinrichtung 1 gemäß dem Ausführungsbeispiel nach Fig. 3 entspricht weitgehend derjenigen des ersten Ausführungsbeispiels, so dass in Bezug auf übereinstimmende Bauteile auf die obige Beschreibung verwiesen wird. Lediglich der Anschlusskontakt 4 ist unterschiedlich ausgebildet, indem axial überstehende, umgebogene Abschnitte der Leitungsbahnen 3 verlängert ausgeführt sind und über den Umfang verteilt insgesamt drei derartige, in einem 120°-Winkelabstand angeordnete Anschlusskontakte für die Stromversorgung vorgesehen sind.

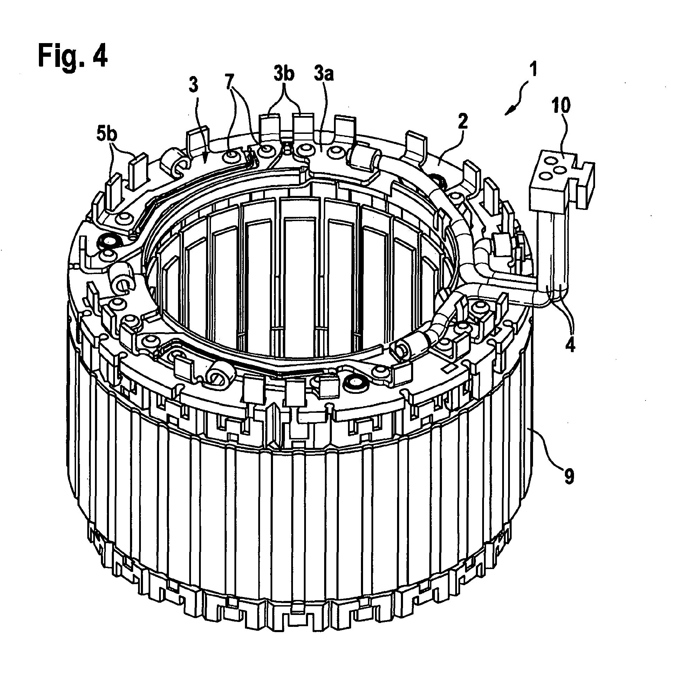

In Fig. 4 ist ein Stator 9 mit stirnseitig aufgesetzter Kontakteinrichtung 1 dargestellt, die dem Ausführungsbeispiel gemäß den Figuren 1 und 2 entspricht. Die Anschlusskontakte 4 sind in einem Stecker 10 zusammengefasst, der mit dem elektrischen Anschluss zu verbinden ist.

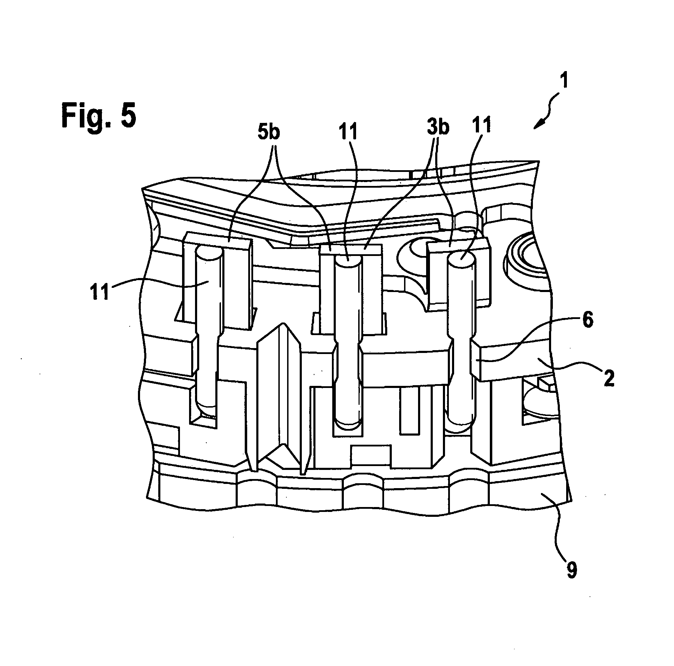

In Fig. 4 fehlt die Verbindung zwischen den Leitungsbahnabschnitten 3b bzw. 5b und dem Spulendraht. In der Ausschnittvergrößerung gemäß Fig. 5 ist dagegen diese Verbindung dargestellt. Der Spulendraht 11 erstreckt sich axial von den darunter liegenden Spulen kommen durch die Aufnahmenuten 6 im Kontaktträger 2 hindurch bis zur Außenseite der flaschenförmigen Abschnitte 3b und 5b der Leitungsbahnen 3 bzw. 5, mit der der Spulendraht 11 in Kontakt steht.

## Patentansprüche

1. Kontakteinrichtung zum Einsatz in einem Stator einer elektrischen Maschine, insbesondere einem Steil- oder Antriebsmotor in Fahrzeugen, wobei die Kontakteinrichtung (1) eine Mehrzahl von über den Umfang angeordneter Spulen im Stator (9) elektrisch kontaktiert, **wobei** die Kontakteinrichtung (1) einen ringförmigen Kontaktträger (2) aus elektrisch isolierendem Material sowie elektrisch leitende Leitungsbahnen (3, 5) zur Kontaktierung der Spulen aufweist, **dadurch gekennzeichnet, dass** die Leitungsbahnen (3, 5) auf beiden Stirnseiten des Kontaktträgers (2) angeordnet und über umgeformte Befestigungselemente (7) am Kontaktträger (2) gehalten sind, dass die Leitungsbahnen (3, 5) als Stanzteile ausgebildet sind, wobei ein Abschnitt **(3a, 5a) des Stanzteils (3, 5) flächig auf dem Kontaktträger (2) aufliegt und über das umgeformte Befestigungselement (7) am Kontaktträger (2) fixiert ist,** und ein Abschnitt (3b, 5b) eines Stanzteils (3, 5) gegenüber der Ebene der Stirnseite des Kontaktträgers (2) winklig umgebogen ist zur Herstellung des elektrischen Kontakts mit den Spulen, wobei sämtliche Kontaktabschnitte (3b, 5b) über die Oberseite des Kontaktträgers (2) überstehen.

2. Kontakteinrichtung nach Anspruch 1, **dadurch gekennzeichnet, dass** die Befestigungselemente (7) einstückig mit dem Kontaktträger (2) ausgebildet sind.

3. Kontakteinrichtung nach Anspruch 1 oder 2, **dadurch gekennzeichnet, dass** die Befestigungselemente (7) als Befestigungspin ausgebildet sind.

4. Kontakteinrichtung nach Anspruch 3, **dadurch gekennzeichnet, dass** der Befestigungspin im montierten Zustand in eine Ausnehmung in einer Leitungsbahn (3, 5) einragt.

5. Kontakteinrichtung nach einem der Ansprüche 1 bis 4, **dadurch gekennzeichnet, dass** der Kontaktträger (2) aus Kunststoff besteht und insbesondere im Kunststoff-Spritzgussverfahren hergestellt ist.

6. Kontakteinrichtung nach einem der Ansprüche 1 bis 5, **dadurch gekennzeichnet, dass die Leitungsbahnen (3, 5) zur Stromversorgung elektrisch mit Anschlusskontakten (4) verbunden sind, die als Leitungsdraht ausgebildet sind.**

7. Kontakteinrichtung nach einem der Ansprüche 1 bis 6, **dadurch gekennzeichnet, dass** am Kontaktträger (2) winkelversetzt zumindest zwei gleiche Stanzteile (3, 5) an einer Stirnseite des Kontaktträgers (2) angeordnet sind.

8. Stator einer elektrischen Maschine mit einer Kontakteinrichtung (1) nach einem der Ansprüche 1 bis 7.

9. Elektrische Maschine, insbesondere Elektromotor mit einem Stator (9) nach Anspruch 8.

## Claims

1. Contact device for use in a stator of an electrical machine, in particular an actuating or drive motor in vehicles, wherein the contact device (1) makes electrical contact with a plurality of coils, which are arranged over the circumference, in the stator (9), wherein the contact device (1) has an annular contact carrier (2) which is composed of electrically insulating material and has electrically conductive conductor tracks (3, 5) for making contact with the coils, **characterized in that** the conductor tracks (3, 5) are arranged on both end faces of the contact carrier (2) and are held on the contact carrier (2) by means of shaped fastening elements (7), **in that** the conductor tracks (3, 5) are in the form of stamped parts, wherein one section (3a, 5a) of the stamped part (3, 5) bears flat on the contact carrier (2) and is fixed to the contact carrier (2) by means of the shaped fastening element (7), and one section (3b, 5b) of a stamped part (3, 5) is bent at an angle in relation to the plane of the end face of the contact carrier (2) in order to establish electrical contact with the coils, wherein all of the contact sections (3b, 5b) project beyond the top face of the contact carrier (2).

2. Contact device according to Claim 1, **characterized in that** the fastening elements (7) are integrally formed with the contact carrier (2).

3. Contact device according to Claim 1 or 2, **characterized in that** the fastening elements (7) are in the form of a fastening pin.

4. Contact device according to Claim 3, **characterized in that** the fastening pin projects into a recess in a conductor track (3, 5) in the assembled state.

5. Contact device according to one of Claims 1 to 4, **characterized in that** the contact carrier (2) is composed of plastic and, in particular, is produced using the plastic injection-moulding method.

6. Contact device according to one of Claims 1 to 5, **characterized in that** the conductor tracks (3, 5), for supplying power, are electrically connected to connection contacts (4) which are in the form of conductor wire.

7. Contact device according to one of Claims 1 to 6, **characterized in that** at least two identical stamped parts (3, 5) are arranged with an angular offset on the contact carrier (2) at an end face of the contact carrier (2).

8. Stator of an electrical machine comprising a contact device (1) according to one of Claims 1 to 7.

9. Electrical machine, in particular electric motor, comprising a stator (9) according to Claim 8.

## Revendications

1. Dispositif de contact destiné à être utilisé dans un stator d'une machine électrique, en particulier un moteur de réglage ou d'entraînement dans des véhicules, le dispositif de contact (1) venant en contact électrique avec une pluralité de bobines disposées sur la périphérie dans le stator (9), le dispositif de contact (1) présentant un support de contact annulaire (2) en matériau électriquement isolant ainsi que des pistes conductrices électriquement conductrices (3, 5) pour le contact avec les bobines, **caractérisé en ce que** les pistes conductrices (3, 5) sont disposées sur les deux côtés frontaux du support de contact (2) et sont retenues sur le support de contact (2) par le biais d'éléments de fixation façonnés (7), **en ce que** les pistes conductrices (3, 5) sont réalisées sous forme de pièces estampées, une portion (3a, 5a) de la pièce estampée (3, 5) reposant à plat sur le support de contact (2) et étant fixée au support de contact (2) par le biais de l'élément de fixation façonné (7), et une portion (3b, 5b) d'une pièce estampée (3, 5) étant recourbée suivant un certain angle par rapport au plan du côté frontal du support de contact (2) afin d'établir le contact électrique avec les bobines, toutes les portions de contact (3b, 5b) dépassant au-delà du côté supérieur du support de contact (2).

2. Dispositif de contact selon la revendication 1, **caractérisé en ce que** les éléments de fixation (7) sont réalisés d'une seule pièce avec le support de contact (2).

3. Dispositif de contact selon la revendication 1 ou 2, **caractérisé en ce que** les éléments de fixation (7) sont réalisés sous forme de broche de fixation.

4. Dispositif de contact selon la revendication 3, **caractérisé en ce que** la broche de fixation, dans l'état monté, pénètre dans un évidement dans une piste conductrice (3, 5).

5. Dispositif de contact selon l'une quelconque des revendications 1 à 4, **caractérisé en ce que** le support de contact (2) se compose de plastique et est fabriqué notamment par un procédé de moulage par injection de plastique.

6. Dispositif de contact selon l'une quelconque des revendications 1 à 5, **caractérisé en ce que** les pistes conductrices (3, 5), en vue de l'alimentation électrique, sont connectées électriquement à des contacts de raccordement (4) qui sont réalisés sous forme de fil conducteur.

7. Dispositif de contact selon l'une quelconque des revendications 1 à 6, **caractérisé en ce qu'**au moins deux pièces estampées identiques (3, 5) sont disposées de manière décalée suivant un certain angle sur le support de contact (2) au niveau d'un côté frontal du support de contact (2).

8. Stator d'une machine électrique comprenant un dispositif de contact (1) selon l'une quelconque des revendications 1 à 7.

9. Machine électrique, en particulier moteur électrique comprenant un stator (9) selon la revendication 8.
